# EUROPÄISCHE PATENTANMELDUNG

(11) **EP 3 889 563 A1**
(43) Veröffentlichungstag der Anmeldung: **06.10.2021**
(21) Anmeldenummer: 21165944.6
(22) Anmeldetag: 30.03.2021
(51) Int. Cl.: G01L 3/14, G01L 1/14, G01L 5/165, B25J 9/16, G01L 5/22

(54) **SENSOR ZUR DETEKTION EINER KRAFT UND/ODER EINES DREHMOMENTS**

(30) Priorität: 01.04.2020 DE 102020109109
(71) Anmelder: Wellgo Systems GmbH, 66620 Nonnweiler (DE)
(72) Erfinder: Heub-Schneider, Andreas, 66625 Nohfelden (DE); Linn, Manfred, 54422 Neuhütten (DE); Kleen, Stephan, 66125 Saarbrücken (DE); Prof. Nienhaus, Matthias, 55232 Alzey (DE); Schwartz, Robert, 66121 Saarbrücken (DE)
(74) Vertreter: Patentanwälte Bernhardt / Wolff Partnerschaft mbB

(57) **Zusammenfassung**

Die Erfindung betrifft einen Sensor (1) zur Detektion einer Kraft und/oder eines Drehmoments, der ein Element (2) zur Detektion der Kraft und/oder des Drehmoments aufweist, das in einem Zustand, der frei von einer Belastung durch die Kraft und/oder das Drehmoment ist, in einer Ausgangsposition angeordnet ist und der unter Belastung durch die Kraft und/oder das Drehmoment in einer Belastungsposition angeordnet ist, wobei in dem Sensor (1) für das Detektionselement (2) eine Hauptdetektionsrichtung vorgesehen ist und der Sensor zur Detektion zumindest einen Plattenkondensator (3,4,5,6) aufweist. Erfindungsgemäß weist der Sensor (1) zumindest zwei Plattenkondensatoren (3,4,5,6) auf und die Platten der Plattenkondensatoren (3,4,5,6) sind schräg zu der Hauptdetektionsrichtung (X) angeordnet. Vorzugsweise weist der Sensor (1) zumindest drei, besonders bevorzugt zumindest vier, Platten-kondensatoren (3,4,5,6) auf. Zweckmäßigerweise sind in dem Sensor für das Detektionselement zwei Nebendetektionsrichtungen (Y,Z) vorgesehen, die zueinander und zu der Haupdetektionsrichtung (X) orthogonal sind, und die Platten der Plattenkondensatoren (3,4,5,6) sind schräg zu der Haupdetektionsrichtung (X) und zumindest einer der Nebendetektionsrichtungen (Y,Z) angeordnet. In einer Ausführungsform der Erfindung sind zumindest zwei, vorzugsweise zumindest vier, der Plattenkondensatoren (3,4,5,6) zueinander parallel angeordnet, wobei vorzugsweise jeweilig die Platten eines der Plattenkondensatoren (3,4,5,6) parallel zu den Platten eines oder mehrerer der anderen Plattenkondensatoren (3,4,5,6) angeordnet sind.

## Beschreibung

Die Erfindung betrifft einen Sensor zur Detektion einer Kraft und/oder eines Drehmoments, der ein Element zur Detektion der Kraft und/oder des Drehmoments aufweist, das in einem Zustand, der frei von einer Belastung durch die Kraft und/oder das Drehmoment ist, in einer Ausgangsposition und unter Belastung durch die Kraft und/oder das Drehmoment in einer Belastungsposition angeordnet ist, wobei in dem Sensor für das Detektionselement eine Hauptdetektionsrichtung vorgesehen ist und der Sensor zur Detektion zumindest einen Plattenkondensator aufweist.

Ein solcher Sensor ist durch Benutzung bekannt. Zur Messung einer Kraft wird die Kapazität des Plattenkondensators bestimmt, die sich bei Beaufschlagung mit der Kraft dadurch ändert, dass die Platten im Verhältnis zueinander bewegt werden. Der Plattenkondensator ist derart angeordnet, dass seine Platten senkrecht zu der Hauptdetektionsrichtung angeordnet sind.

Der Erfindung liegt die Aufgabe zugrunde, einen Sensor der eingangs genannten Art zu schaffen, der bei konstruktiv einfachem Aufbau die Kraft und/oder das Drehmoment richtungsabhängig detektieren kann.

Erfindungsgemäß wird diese Aufgabe dadurch gelöst, dass der Sensor zumindest zwei Plattenkondensatoren aufweist und die Platten der Plattenkondensatoren schräg zu der Hauptdetektionsrichtung angeordnet sind.

Bei der erfindungsgemäßen Anordnung der Platten werden mittels jedes der Plattenkondensatoren nicht nur Kräfte oder Komponenten von Kräften detektiert, die in Richtung der Hauptdetektionsrichtung wirken, sondern auch Kräfte oder Kraftkomponenten in von der Hauptdetektionsrichtung abweichenden Richtungen. Durch Bestimmung der Kapazitäten der Plattenkondensatoren und Vergleich der ermittelten Kapazitäten oder/und Kapazitätsänderungen wird es möglich, die Richtung einer Kraft und/oder eines Drehmoments, die bzw. das auf das Detektionselement wirkt, zu erfassen.

Während zur richtungsabhängigen Erfassung von Kräften in drei senkrecht zueinander angeordnete Raumrichtungen mittels des eingangs erläuterten, durch Benutzung bekannten Sensors für jede Raumrichtung jeweils ein Plattenkondensator erforderlich wäre, kommt der erfindungsgemäße Sensor aufgrund der schrägen Anordnung mit weniger Plattenkondensatoren aus. Insbesondere lassen sich mit lediglich zwei Plattenkondensatoren Kräfte in drei zueinander senkrecht angeordneten Raumrichtungen bestimmen.

Darüber hinaus ergeben sich auch Vorteile bezüglich der Drehmomentdetektion. Während bei der bekannten Anordnung der Plattenkondensatoren zur Bestimmung eines in eine der Raumrichtungen wirkenden Drehmoments zwei im Abstand von einander angeordnete Plattenkondensatoren aufweisen müsste, damit sich das Drehmoment aus den mittels der Plattenkondensatoren detektierten Kräften und dem Abstand zwischen den Plattenkondensatoren ermitteln lässt, weist der Sensor nach der Erfindung auch hier den Vorteil auf, dass bei geeigneter Auswertung der gemessenen Kapazitäten das Drehmoment richtungsabhängig mit einer geringeren Anzahl der Plattenkondensatoren ermittelt werden kann.

Während es vorstellbar wäre, die Kraft und/oder das Drehmoment mittels der Plattenkondensatoren dadurch zu detektieren, das Dielektrikum zwischen den Platten, bspw. durch Bewegen eines Stoffes in den Raum zwischen den Platten, zu ändern, erfolgt die Detektion in der bevorzugten Ausführungsform der Erfindung dadurch, dass die Platten der Plattenkondensatoren im Verhältnis zueinander bewegt werden und die Kapazitäten, die die Plattenkondensatoren dann aufweisen, oder die sich daraus ergebenden Kapazitätsänderungen bestimmt werden.

In einer bevorzugten Ausführungsform der Erfindung weist der Sensor zumindest drei, vorzugsweise zumindest vier, der schräg angeordneten Plattenkondensatoren auf. Als besonders vorteilhaft hat es sich erwiesen, vier der Plattenkondensatoren vorzusehen.
Vorteilhaft erlaubt eine größere Anzahl an Plattenkondensatoren eine genauere richtungsspezifische Detektion. Darüber hinaus können die Kapazitäten bzw. Kapazitätsänderungen, die mit den verschiedenen Plattenkondensatoren detektiert werden, miteinander verglichen werden, wenn die jeweilig zu vergleichenden Plattenkondensatoren in dazu geeigneten Anordnungen im Sensor vorgesehen sind. Ein Vergleich der detektierten Kapazitäten erweist sich als vorteilhaft, weil einerseits bei gleicher Kapazitäts- bzw. Kapazitätsänderungsdetektion auch bei lediglich kleinen detektierten Werten von einer korrekten Detektion ausgegangen werden kann und andererseits eventuell auftretende Detektionsfehler, die z.B. aufgrund von Wirkungen von elektromagnetischen Störfeldern in den Plattenkondensatoren auftreten können, z.B. durch geeignete Differenzbildung kompensiert werden. Solche für Vergleiche geeignete Anordnungen können sein, dass die Platten der zu vergleichenden Plattenkondensatoren parallel zueinander oder bezogen auf die Hauptdetektionsachse oder einer der unten näher erläuterten Nebendetektionsachsen oder der unten genannte Ebenen einander gegenüberliegend, insbesondere gespiegelt zueinander, angeordnet sind.

In einer Ausgestaltung der Erfindung ist das Detektionselement unter der Belastung im Verhältnis zu einem Trägerelement, an dem es angeordnet ist, bewegbar.
In einer Ausführungsform der Erfindung ist das Detektionselement an dem Trägerelement derart gelagert, dass es in der Hauptdetektionsrichtung und den Nebendetektionsrichtungen im Verhältnis zu dem Trägerelement beweglich und vorzugsweise im Verhältnis zu dem Trägerelement drehbar ist.
Vorzugsweise sind das Detektionselement und/oder das Trägerelement starre, besonders bevorzugt einteilige, Körper.

Zweckmäßigerweise ist zwischen den Detektionselementen und dem Trägerelement ein Federelement vorgesehen, welches dazu eingerichtet ist, das Detektionselement, wenn es frei von Belastung durch die Kraft und/oder das Drehmoment ist, in die Ausgangsposition zurückzubewegen. Das Federelement wirkt vorzugsweise isotrop.

In einer Ausführungsform der Erfindung ist an dem Detektionselement jeweilig eine Elektrodenseite der die jeweiligen Plattenkondensatoren bildenden Platten und an dem anderen Trägerelement jeweilig die gegenüberliegende Elektrodenseite bildenden Platten der Plattenkondensatoren angeordnet. Bei Belastung werden die Platten, die an dem Detektionselement angeordnet sind, gemeinsam mit dem Detektionselement und damit auch gegenüber den an dem Trägerelement angeordneten Platten bewegt. Die Plattenkondensatoren oder die sich dadurch ergebende Änderung der Kapazitäten lassen sich messen und dadurch die Kraft bzw. das Drehmoment detektieren.

In einer weiteren Ausgestaltung der Erfindung sind das Detektionselement und das Trägerelement zumindest in dem Bereich, in dem die Platten angeordnet sind, ineinander, vorzugsweise ineinander liegend und/oder ineinander steckend, angeordnet.
Zweckmäßigerweise ist das Trägerelement zumindest in dem Bereich, in dem die Platten angeordnet sind, innerhalb des Detektionselements oder das Detektionselement in dem Bereich innerhalb des Trägerelements angeordnet.

Diese Anordnung erweist sich insbesondere als vorteilhaft, wenn das Detektionselement und/oder das Trägerelement einen länglichen, vorzugsweise zylindrischen, Körper umfasst. Der zylindrische Körper kann ein Kreiszylinder sein oder im Querschnitt senkrecht zur Zylinderachse eine elliptische oder polygonale Form, vorzugsweise eine rechteckige, ggf. quadratische Form, aufweisen.

Der Körper des Detektionselements kann zumindest abschnittsweise hohl, insbesondere hohlzylindrisch, sein, und das Trägerelement aufnehmen.

In einer weiteren Ausgestaltung der Erfindung ist zumindest der Raum zwischen dem Detektionselement und dem Trägerelement, insbesondere auch der das Dielektrikum bildende Raum zwischen den je einen Plattenkondensator bildenden Platten, mit einem elastischen Material, vorzugsweise einem Kunststoff, besonders bevorzugt einem Elastomer, gefüllt, wobei das Detektionselement vorzugsweise durch das elastische Material an dem Trägerelement gelagert ist. Das elastische Material kann bspw. eine Silikonelastomer oder ein Silikonkautschuk sein.

Eine so gebildete Füllung bildet das genannte Federelement. Sie schützt den Sensor ferner gegen Verschmutzung und Korrosion. Außerdem erhöht die Anordnung des elastischen Materials als Dielektrikum zwischen den Platten die Kapazität der Plattenkondensatoren im Vergleich zu einer Anordnung, bei der der Raum zwischen den Platten lediglich mit Luft gefüllt ist. Vorzugsweise ist der Raum zwischen dem Detektionselement und dem Trägerelement vollständig mit dem elastischen Material gefüllt.

Alternativ wäre vorstellbar, das Detektionselement derart mittels einzelner Federn, z.B. Blattfedern, Schraubenfedern, am Trägerelement anzuordnen, dass sie gemeinsam eine isotrope Federwirkung erzielen.

Die Hauptdetektionsrichtung definiert zweckmäßigerweise eine Richtung, in welcher der Sensor eine Kraft detektieren kann. In einer Ausführungsform der Erfindung weist der Sensor eine Hauptdetektionsachse auf, die in die Hauptdetektionsrichtung gerichtet ist und durch den Sensor verläuft. Die Hauptdetektionsrichtung bzw. die Hauptdetektionsachse sind räumlich bezogen auf den Sensor festgelegt.

In einer Ausführungsform der Erfindung ist in dem Sensor für das Detektionselement zusätzlich zu der Hauptdetektionsrichtung zumindest eine Nebendetektionsrichtung vorgesehen, die zu der Hauptdetektionsrichtung orthogonal ist.
Zweckmäßigerweise sind in dem Sensor zwei Nebendetektionsrichtungen vorgesehen, die zueinander und zu der Hauptdetektionsrichtung orthogonal sind.

Vorzugsweise weist der Sensor zumindest eine Nebendetektionsachse, vorzugsweise zwei Nebendetektionsachsen, auf, die parallel zu der Nebendetektionsrichtung bzw. den Nebendetektionsrichtungen angeordnet sind und durch den Sensor verlaufen. Auch die Nebendetektionsrichtung/Nebendetektionsrichtungen bzw. die Nebendetektionsachse/Nebendetektionsachsen sind zweckmäßigerweise bezogen auf den Sensor räumlich festgelegt.
Vorzugsweise ist eine Drehmomentachse, bzgl. welcher das Drehmoment mittels des Sensors bestimmbar ist, parallel zu der Hauptdetektionsrichtung oder einer der Nebendetektionsrichtungen. Besonders bevorzugt ist die Drehmomentachse entlang der Hauptdetektionsachse oder einer der Nebendetektionsachsen vorgesehen. Zumindest eine der Nebendetektionsachsen verläuft vorzugsweise durch eine, ggf. entlang einer, Längs- und/oder einer Symmetrieachse des Sensors.

In einer besonders bevorzugten Ausgestaltung der Erfindung sind zumindest zwei der Kondensatoren bezogen auf eine Nebendetektionsachse, die entlang einer Längs- und/oder einer Symmetrieachse des Sensors verläuft, einander gegenüberliegend, insbesondere gespiegelt zueinander, angeordnet.

In einer Ausführungsform der Erfindung weist der Sensor mehr als zwei der Plattenkondensatoren auf und die Plattenkondensatoren sind um die Nebendetektionsachse, die entlang einer Längs- und/oder einer Symmetrieachse des Sensors verläuft, herum angeordnet. Zweckmäßigerweise sind die Plattenkondensatoren im Abstand voneinander angeordnet. Dies gilt insbesondere auch für Plattenkondensatoren, die im Sensor in einer identischen Ebene angeordnet sind, die zu einer Längs- und/oder einer Symmetrieachse des Sensors orthogonal ist. Vorzugsweise sind die Abstände zwischen jeweilig benachbarten Plattenkondensatoren gleich groß.

Vorzugsweise sind zueinander benachbarte Plattenkondensatoren bezogen auf die genannte Nebendetektionsachse, insbesondere bei Projektion auf die Ebene, welche zu einer Längs- und/oder einer Symmetrieachse des Sensors orthogonal ist, jeweilig in einem Winkel von zumindest 15 °, besonders bevorzugt zumindest 25 °, zueinander angeordnet. Zweckmäßigerweise ist der jeweilige Winkel zwischen den benachbarten Plattenkondensatoren gleich groß.

Zweckmäßigerweise sind zumindest zwei der Kondensatoren auf einander gegenüberliegenden Seiten einer Ebene, in welcher die Nebendetektionsachse, die entlang einer Längs- und/oder einer Symmetrieachse des Sensors verläuft, liegt, angeordnet.
Vorzugsweise sind zumindest zwei der Kondensatoren auf einander gegenüberliegenden Seiten einer Ebene angeordnet, in welcher sowohl
a) die Nebendetektionsachse, die entlang einer Längs- und/oder einer Symmetrieachse des Sensors verläuft, als auch
b) die Hauptdetektionsachse oder die andere Nebendetektionsachse, die senkrecht zu der Hautdetektionsachse und zu der Längs- und/oder der Symmetrieachse des Sensors angeordnet ist,
liegt.
Besonders bevorzugt sind zumindest zwei der Kondensatoren bezogen auf die letztgenannte Ebene einander gegenüberliegend, insbesondere bezogen auf die Ebene gespiegelt zueinander angeordnet.

In einer weiteren Ausführungsform der Erfindung sind zumindest zwei der Kondensatoren auf einander gegenüberliegenden Seiten einer Ebene angeordnet, in welcher sowohl
a) die Nebendetektionsachse, die entlang einer Längs- und/oder einer Symmetrieachse des Sensors verläuft, als auch
b) eine Gerade, die zur Hauptdetektionsachse und der anderen Nebendetektionsachse, die senkrecht zu der Hautdetektionsachse und zu der Längs- und/oder der Symmetrieachse des Sensors angeordnet ist, in einem Winkel von 45 ° angeordnet ist,
liegt.
Besonders bevorzugt sind zumindest zwei der Kondensatoren bezogen auf die letztgenannte Ebene einander gegenüberliegend, insbesondere bezogen auf die Ebene gespiegelt zueinander angeordnet.

Zwei der bezogen auf die Nebendetektionsachse einander gegenüberliegend angeordneten Kondensatoren können ein Kondensatorpaar bilden. Der Sensor kann zwei oder mehrere solcher Paare umfassen.
Zweckmäßigerweise sind zumindest zwei der Kondensatoren am Detektionselement und/oder am Trägerelement bezogen auf die Nebendetektionsachse einander gegenüberliegend angeordnet. Sie können bezogen auf die Nebendetektionsachse achsensymmetrisch zueinander angeordnet sein.

Es versteht sich, dass die Nebendetektionsrichtung/Nebendetektionsrichtungen bzw. die Nebendetektionsachse/Nebendetektionsachsen, wie oben für die Hauptdetektionsrichtung und die Hauptdetektionsachse erläutert, eine Richtung, in welcher mit dem Sensor eine Kraft zu detektieren ist, bzw. eine Achse, in Bezug auf welche das Drehmoment zu erfassen ist, definieren.

Die Hauptdetektionsrichtung, vorzugsweise die Hauptdetektionsachse, ist zweckmäßigerweise an dem Sensor derart vorgesehen, dass sie an dem Sensor erkennbar ist. Sie kann bspw. durch die äußere Form des Sensors oder eine darauf angebrachten Markierung gebildet sein. Beispielsweise könnte vorgesehen sein, dass die Hauptdetektionsrichtung senkrecht zu einer, ggf. ebenen, Bodenplatte des Sensors oder senkrecht oder parallel zu einer Längsachse des Sensors ist.

Es kann zumindest eine der Nebendetektionsrichtungen bzw. der Nebendetektionsachsen, wie oben für die Hauptdetektionsrichtung bzw. die Hauptdetektionsachse erläutert ist, auf dem Sensor markiert sein oder sich aus der Form des Sensors ergeben.

In einer bevorzugten Ausführungsform der Erfindung sind die Platten der Plattenkondensatoren schräg zu der Hauptdetektionsrichtung und zumindest einer der Nebendetektionsrichtungen, ggf. beiden Nebendetektionsrichtungen, angeordnet. Es versteht sich, dass die jeweilig gemeinsam einen einzigen Plattenkondensator bildenden Platten vorzugsweise parallel zueinander angeordnet sind.
Vorteilhaft lässt sich bei der schrägen Anordnung der Platten auch zu einer der Nebendetektionsrichtungen oder beiden Nebendetektionsrichtungen die Richtung der Kraft und/oder des Drehmoments, das auf das Detektionselement wirkt, genauer bestimmen.

Zweckmäßigerweise sind die Platten der Plattenkondensatoren in einem Winkelbereich von 5 bis 85 °, vorzugsweise von 20 bis 70°, besonders bevorzugt von 35 bis 55°, zu der Hauptdetektionsrichtung und vorzugsweise zumindest einer der, ggf. beider, Nebendetektionsrichtungen, angeordnet. Als besonders vorteilhaft für eine richtungsabhängige Kraft- und/oder Drehmomentdetektion, die in allen Raumrichtungen eine gleich gute Detektionsgenauigkeit hat, hat es sich erwiesen, die Platten in einem Winkel von 45° zu der Hauptdetektionsrichtung und vorzugsweise zumindest einer der, ggf. beider, Nebendetektionsrichtungen, anzuordnen.

In einer Ausführungsform der Erfindung sind zumindest zwei der Plattenkondensatoren parallel zueinander angeordnet, wobei vorzugsweise jeweilig die Platten eines der Plattenkondensatoren parallel zu den Platten eines oder mehrerer der anderen Plattenkondensatoren angeordnet sind. Vorgesehen sein kann, dass die parallel zueinander angeordneten Platten bzw. Plattenkondensatoren jeweilig in derselben bzw. denselben Ebenen angeordnet sind.
Die Anordnung der Platten bzw. Plattenkondensatoren parallel zueinander bzw. in derselben Ebene erlaubt eine besonders einfache Auswertung der Ergebnisse der Detektion. Es hat sich als besonders vorteilhaft erwiesen, zwei der Plattenkondensatoren in derselben Ebene anzuordnen.

Zweckmäßigerweise sind zumindest zwei der Plattenkondensatoren nicht parallel zueinander angeordnet, wobei es vorzugsweise jeweilig die Platten eines der Plattenkondensatoren nicht parallel zu den Platten eines oder mehrerer der anderen Plattenkondensatoren angeordnet sind. Die unterschiedlichen Ausrichtungen der Platten bzw. der Plattenkondensatoren, die sich aus dieser Anordnung ergeben, erlauben eine verbesserte Genauigkeit der Detektion der Richtung der wirkenden Kraft und/oder des wirkenden Drehmoments, da sich Kräfte bzw. Kraftkomponenten in zusätzlichen Richtungen ermitteln lassen.

In einer weiteren Ausgestaltung der Erfindung sind zumindest zwei der Plattenkondensatoren, insbesondere deren Platten, bezogen auf eine Ebene einander gegenüberliegend, insbesondere gespiegelt zueinander, angeordnet, in der vorzugsweise die Hauptdetektionsachse und eine der Nebendetektionsachsen oder beide Nebendetektionsachsen angeordnet sind. Besonders bevorzugt sind die Plattenkondensatoren bezogen auf eine Ebene einander gegenüberliegend, insbesondere gespiegelt zueinander, angeordnet, die orthogonal zu der genannten Längs- und/oder einer Symmetrieachse des Sensors oder der Nebendetektionsachse angeordnet ist, die entlang einer Längs- und/oder einer Symmetrieachse des Sensors verläuft. Vorteilhaft können die Kapazitäten bzw. Kapazitätsänderungen, die mit den verschiedenen, sich bzgl. der Ebene gegenüberliegenden bzw. dazu gespiegelten Plattenkondensatoren detektiert werden, miteinander verglichen werden.

Zweckmäßigerweise weist der Sensor zumindest zwei, ggf. mehrere, Paare von Plattenkondensatoren auf, die bezüglich einer der letztgenannten Ebenen einander gegenüberliegend, insbesondere gespiegelt zueinander, angeordnet sind. Dies ermöglicht eine vergleichsweise einfache Ermittlung, insbesondere Berechnung der Kräfte bzw. Drehmomente trotz des nichtlinearen Verhaltens der Kapazitätsänderung bei Plattenabstandsänderungen in entgegengesetzten Richtungen.

In einer weiteren Ausgestaltung der Erfindung sind die Plattenkondensatoren bezogen auf die Hauptdetektionsrichtung oder eine der Nebendetektionsrichtungen auf derselben Höhe angeordnet. Vorteilhaft lassen sich bei einer derartigen Anordnung auf das Detektionselement wirkende Drehmomente besonders einfach bestimmen.

In einer bevorzugten Ausführungsform der Erfindung weist der Sensor zumindest zwei, ggf. mehrere, Gruppen von Plattenkondensatoren auf, die jeweilig bezogen auf die Hauptdetektionsrichtung oder eine der Nebendetektionsrichtungen auf derselben Höhe angeordnet sind, wobei die verschiedenen Gruppen der Plattenkondensatoren jeweilig bezogen auf die jeweilige Hauptdetektionsrichtung bzw. die jeweilige Nebendetektionsrichtung, bezogen auf welche die Plattenkondensatoren in derselben Höhe angeordnet sind, im Abstand voneinander angeordnet sind. Zweckmäßigerweise sind die Plattenkondensatoren zumindest zweier der im Abstand voneinander angeordneten Gruppen jeweilig gruppenweise bezogen auf Ebene einander gegenüberliegend, insbesondere gespiegelt zueinander, angeordnet, in der vorzugsweise die Hauptdetektionsachse und eine der Nebendetektionsachsen oder beide Nebendetektionsachsen angeordnet sind.
Besonders bevorzugt sind die Gruppen gruppenweise bezogen auf eine Ebene gespiegelt zueinander angeordnet, die orthogonal zu der genannten Längs- und/oder einer Symmetrieachse des Sensors oder der Nebendetektionsachse angeordnet ist, die entlang einer Längs- und/oder einer Symmetrieachse des Sensors verläuft. Dadurch wird es möglich, die Kapazitäten bzw. Kapazitätsänderungen, die mit den verschiedenen, sich bzgl. der Ebene gegenüberliegenden oder bzgl. der Ebene gespiegelten Plattenkondensatoren detektiert werden, einzeln oder gruppenweise miteinander zu vergleichen.

Vorgesehen sein kann, dass die Gruppen, insbesondere die jeweiligen Platten der Plattenkondensatoren an demselben Detektionselement und/oder demselben Trägerelement angeordnet sind. Als besonders vorteilhaft hat es sich erwiesen, die Plattenkondensatoren der verschiedenen Plattenkondensatorgruppen derart im Sensor anzuordnen, dass sich die Kapazitäten der Plattenkondensatoren der verschiedenen Plattenkondensatorgruppen bei Kraft- oder/und Drehmomenteinwirkung entgegengesetzt vergrößern oder verkleinern.

Dies kann beispielsweise dadurch erreicht werden, dass das Trägerelement in dem Detektionselement oder das Detektionselement in dem Trägerelement angeordnet ist und die Plattenkondensatoren der verschiedenen Plattenkondensatorgruppen so am Trägerelement und am Detektionselement angeordnet sind, dass sich die Abstände der Kondensatorplatten einer der Plattenkondensatorgruppen vergrößern und die Abstände einer anderen der Plattenkondensatorgruppen, vorzugsweise in gleichem Maße, verkleinern.

Ferner könnte für jede der Plattenkondensatorgruppen ein eigenes Detektionselement und ein eigenes Trägerelement vorgesehen sein.

In einer Ausführungsform der Erfindung weist der Sensor vier Plattenkondensatoren auf, die vorzugsweise wie oben erläutert bezogen auf die Hauptdetektionsrichtung oder eine der Nebendetektionsrichtungen auf derselben Höhe angeordnet sind, wobei je zwei der Plattenkondensatoren bzw. deren Platten in derselben Ebene angeordnet sind und die Paare der Plattenkondensatoren, die in derselben Ebene angeordnet sind, bezogen auf eine Ebene, in der vorzugsweise die Hauptdetektionsachse und eine der Nebendetektionsachsen oder beide Nebendetektionsachsen angeordnet sind, einander gegenüberliegend, insbesondere gespiegelt zueinander, angeordnet sind.

In einer besonders bevorzugten Ausführungsform der Erfindung weist der Sensor vier Plattenkondensatoren auf, die bezogen auf die Hauptdetektionsrichtung oder eine der Nebendetektionsrichtungen auf derselben Höhe angeordnet sind, wobei zwei der Plattenkondensatoren bzw. deren Platten in derselben Ebene angeordnet sind und wobei die beiden anderen Plattenkondensatoren in voneinander unterschiedlichen Ebenen angeordnet sind, die quer zu der Ebene angeordnet sind, in der die beiden in derselben Ebene angeordneten Plattenkondensatoren liegen. Vorzugsweise sind auch die beiden nicht in derselben Ebene angeordneten Plattenkondensatoren schräg zueinander angeordnet.

In einer Ausgestaltung der Erfindung umfasst der Sensor eine Einrichtung zur Messung der Kapazitäten der Plattenkondensatoren. Ferner kann der Sensor mit einer Einrichtung zur Übermittlung der Messergebnisse vorgesehen sein.

Zweckmäßigerweise ist der Sensor dazu eingerichtet, aus den gemessenen Kapazitäten die Kraft und/oder das Drehmoment, insbesondere deren bzw. dessen Richtung und/oder Größen, zu bestimmen. Zweckmäßigerweise werden die ermittelten Kapazitäten dazu den jeweiligen Plattenkondensatoren zugeordnet und die Kapazitäten zueinander ins Verhältnis gesetzt. Dabei kann die jeweilige Größe der Kapazitäten bzw. Kapazitätsänderungen berücksichtigt werden, um eine Richtung, in der die Kraft und/oder das Drehmoment wirkt, besonders genau bestimmen zu können.
Zweckmäßigerweise ist die Einrichtung zur Messung der Kapazitäten durch einen Wandler gebildet, der die ermittelten Kapazitäten in digitale Signale umwandelt ("Capitance-to-digital-converter"). Vorzugsweise kann der Wandler gleichzeitig die Kapazitäten sämtlicher Plattenkondensatoren des Sensors bestimmen. Die Einrichtung zur Bestimmung der Kraft und/oder des Drehmoments ist vorzugsweise durch einen Mikrocontroller gebildet. Zur Übermittlung der Messergebnisse bzw. der Ergebnisse der Bestimmung der Kraft und/oder des Drehmoments werden diese über eine Datenleitung, bspw. ein Datenkabel, oder per Funk übertragen.

In einer besonders bevorzugten Ausführungsform der Erfindung ist das Detektionselement als Handgriff gebildet. Ferner kann der Sensor als Steuerknüppel für ein Fahrzeug oder als Eingabegerät für einen Computer, insbesondere als Joystick, ausgebildet sein.
Zur Bildung des Handgriffs oder des Steuerknüppels hat es sich als besonders vorteilhaft erwiesen, den Sensor, insbesondere das Detektionselement, in Form eines Zylinders vorzusehen.
Weist der Sensor, insbesondere das Detektionselement, die Form eines Zylinders, insbesondere eines senkrechten Kreiszylinders, auf, ist die Hauptdetektionsrichtung, insbesondere die Hauptdetektionsachse, senkrecht auf eine Längsachse, insbesondere eine Symmetrieachse, des Sensors gebildet. Zweckmäßigerweise ist die Position der Hauptdetektionsachse in dem Sensor derart vorgesehen, dass sie durch die Symmetrieachse geführt ist. Ferner ist eine der Nebendetektionsachsen zweckmäßigerweise derart vorgesehen, dass sie entlang der Symmetrieachse verläuft.

Der Sensor ist zweckmäßigerweise, insbesondere bei Ausbildung als Handgriff, Teil einer manuellen Steuerung eines durch einen Motor angetriebenen Geräts, vorzugsweise eines Fahrzeugs oder eines Roboterarms. Der Handgriff ist zweckmäßigerweise direkt an dem Gerät angeordnet oder über ein Verbindungsmittel, bspw. eine Stange, mit dem Gerät verbunden. Besonders vorteilhaft erweist sich der erfindungsgemäß als Handgriff ausgebildete Sensor, wenn er Teil eines Fahrzeugs zur Bewegung von Lasten ist. Ein solches Fahrzeug könnte bspw. ein Handkarren, ein Rollstuhl, ein Golfcaddy, ein Einkaufswagen, oder ein Schubkarren sein. Der Handgriff könnte vorteilhaft auch an einem fahrbaren Bett, insbesondere Krankenhausbett, angeordnet sein, das mittels eines, insbesondere elektrischen, Antriebsmotors bewegbar ist.

Die Erfindung wird nachfolgend anhand von Ausführungsbeispielen und den beiliegenden Zeichnungen, die sich auf die Ausführungsbeispiele beziehen, näher erläutert. Es zeigen:
- Fig. 1: Teile eines erfindungsgemäßen Sensors in verschiedenen Darstellungen,
- Fig. 2: einen anderen erfindungsgemäßen Sensor in verschiedenen Darstellungen, und
- Fig. 3: einen weiteren erfindungsgemäßen Sensor.

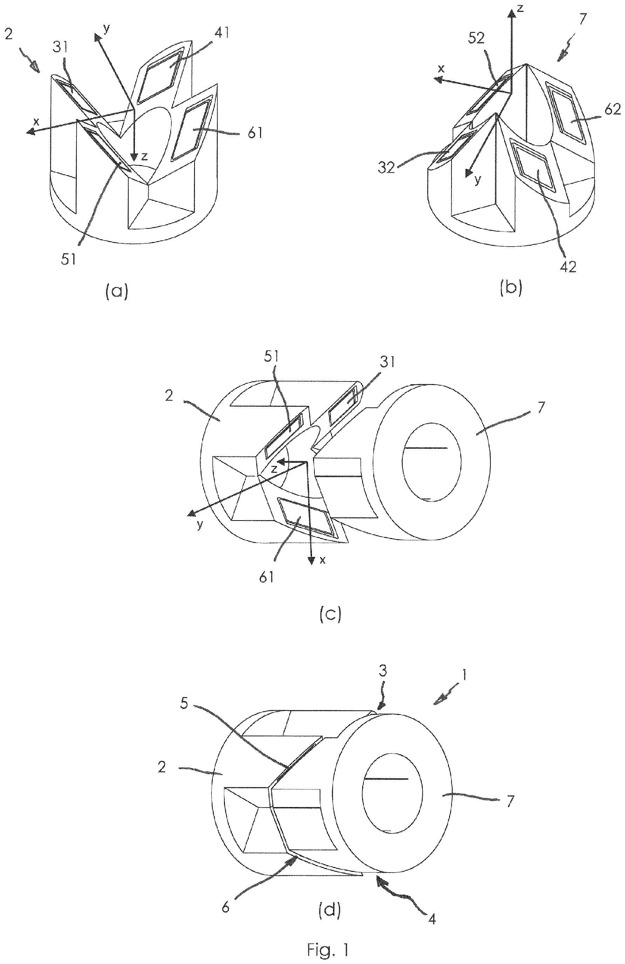

In Fig. 1 ist ein erfindungsgemäßer Sensor 1 gezeigt, der ein Detektionselement 2, das in Fig. 1a dargestellt ist, und ein Trägerelement 7 aufweist, das in Fig. 1b dargestellt ist. Fig. 1d zeigt den Sensor 1 in funktionsfähigem Zustand, in dem das Trägerelement 7 in das Detektionselement 2 eingesetzt ist. Fig. 1c zeigt die Anordnung des Detektionselements 2 im Verhältnis zum Trägerelement 7 in einer Explosionsdarstellung, bei der das Trägerelement 7 von dem Detektionselement 2 weggerückt ist.

Wie insbesondere Fig. 1d zu entnehmen ist, weist der Sensor 1 in seiner Gesamtheit eine im Wesentlichen zylindrische Form auf.
Das Detektionselement 2 und das Trägerelement 7 sind ihren Formen derart aneinander angepasst, dass Platten 31,41,51,61 des Detektionselements 2 parallel Platten 32,42,52,62 des Trägerelements 7 gegenüberliegen, wenn das Detektionselement 2 in Fig. 1d gezeigt auf das Trägerelement 7 aufgesteckt ist. Die Platten 31 und 32 bilden gemeinsam einen Plattenkondensator 3, die Platten 41 und 42 bilden gemeinsam einen Plattenkondensator 4, die Platten 51 und 52 bilden gemeinsam einen Plattenkondensator 5 und die Platten 61 und 62 bilden gemeinsam einen Plattenkondensator 6.

Um zu vermeiden, dass die Verschiebung der einzelnen Platten der Plattenkondensatoren 4,5,6 jeweilig in der Ebene, in denen die Plattenkondensatoren 3,4,5,6 angeordnet sind, unabhängig von dem Abstand der Platten voneinander eine Auswirkung auf die Kapazität hat, kann vorgesehen sein, das jeweilig eine der Platten 31,32;41,42;51,52;61,62 eine größere Fläche aufweist als jeweilig die andere Platte 31,32;41,42;51,52;61,62 des jeweiligen Plattenkondensators 3,4,5,6.

Die Platten 31,41,51,61,32,42,52,62 der Plattenkondensatoren 3,4,5,6 sind, wie insbesondere Fig. 1c zu entnehmen ist, schräg zu einer Nebendetektionsachse Z angeordnet, die entlang der Längsachse des Sensors 1 verläuft. Ferner sind die Platten 31,41,51,61,32,42,52,62 der Plattenkondensatoren 3,4,5,6 schräg zu einer Hauptdetektionsachse X angeordnet, die senkrecht zu der Nebendetektionsachse Z ist. Zu einer Achse Y, die senkrecht zu der Nebendetektionsachse Z und der Hauptdetektionsachse X angeordnet ist, sind die Platten 31,41,51,61,32,42,52,62 parallel angeordnet.

Wie insbesondere den Figuren 1a und b zu entnehmen ist, sind die Platten 41,42 und 31,32 der Plattenkondensatoren 3 und 4 in derselben Ebene angeordnet. Ferner sind die Platten 51,52 und 61,62 der Plattenkondensatoren 5 und 6 in derselben Ebene angeordnet. Ferner sind die Plattenkondensatoren 3 und 5 sowie 4 und 6 bezogen auf eine Ebene, in der die Achsen Y und Z angeordnet sind, gespiegelt zueinander angeordnet. Dementsprechend sind auch die Platten 31,51 und 41,61 sowie 42, und 62 und 32 und 52 gespielt zu der Ebene angeordnet.
Als Hauptdetektionsrichtung H ist für den Sensor 1 die Richtung der Hauptdetektionsachse X vorgesehen.

Die Detektion von Kräften oder Drehmomenten erfolgt mit dem Sensor 1 dadurch, dass die Kapazitäten der Plattenkondensatoren 3,4,5,6 gemessen werden. In einer Ausgangsposition, in der das Detektionselement 2 frei von einer Belastung durch eine Kraft oder einen Drehmoment ist, weisen die Plattenkondensatoren 3,4,5,6 Kalibrierungskapazitäten auf, die Ausgangswerte für die Bestimmung der zu messenden Kräfte bzw. Drehmomente bilden. Die Kapazitäten der Plattenkondensatoren 3,4,5,6 ändern sich, sobald das Detektionselement 2 im Verhältnis zu dem Trägerelement 7 bewegt wird. Die Abstände zwischen den jeweiligen Plattenpaaren 31,32;41,42;51,52;61,62 ändern sich in Abhängigkeit von der Größe der Belastung und von der Richtung, in welcher das Detektionselement 2 belastet wird.

In den angefügten Tabellen 1 und 2 sind verschiedene Fälle für Belastungen und dementsprechende Bewegungen des Detektionselements 2 richtungsabhängig im Verhältnis zu dem Trägerelement 7 dargestellt. Die Winkelangaben in Tabelle 2 beziehen sich auf die X-Achse.
In den oberen vier Zeilen der Tabelle ist durch <- und >-Zeichen dargestellt, ob sich die Kapazität der jeweiligen Plattenkondensatoren unter der Belastung verkleinert oder vergrößert. In den unteren sechs Zeilen der Tabelle sind die Größen der Kapazitäten der jeweiligen Plattenkondensatoren ins Verhältnis zueinander gesetzt. Beispielsweise bedeutet
- bei dem Eintrag "3 zu 4" die Angabe "<<", dass sich die Kapazitäten der Kondensatoren 3 und 4 bezogen auf den Ausgangswert, der sich einstellt, wenn der Sensor 1 unbelastet ist, entgegengesetzt zueinander verkleinern bzw. vergrößern und dass die mit dem Kondensator 3 detektierte Kapazität bei dieser Belastung sehr viel kleiner als die mit dem Kondensator 4 detektierte Kapazität ist,
- bei dem Eintrag "3 zu 5" die Angabe "=", dass eine berechnete Differenz aus den Kapazitäten der Kondensatoren 3 und 5 trotz ggf. sich verändernder Kapazitäten gleich bleibt und
- bei dem Eintrag "4 zu 5" die Angabe ">>", dass sich die Kapazitäten der Kondensatoren 34 und 5 bezogen auf den Ausgangswert, der sich einstellt, wenn der Sensor 1 unbelastet ist, entgegengesetzt zueinander vergrößern bzw. verkleinern und dass die mit dem Kondensator 4 detektierte Kapazität in dieser Konfiguration sehr viel größer als die mit dem Kondensator 5 detektierte Kapazität ist.

Es versteht sich, dass abhängig von der Größe der Kapazitäten bzw. der Änderungen die genaue Richtung, aus welcher eine Kraft auf das Detektionselement 2 ausgeübt wird, ermittelt werden kann.

Zu berücksichtigen ist, dass bei dem in Fig. 1 dargestellten Sensor 1 aufgrund der Anordnung der Plattenkondensatoren 3,4,5,6 keine Kraft in Richtung der Achse Y erfasst werden kann.

Wie den letzten beiden Spalten der Tabelle 2 zu entnehmen ist, lässt sich mittels des Sensors 1 ein Drehmoment, das auf das Detektionselement 2 um die Nebendetektionsachse Z wirkt, detektieren. "UZ" bedeutet "Uhrzeigersinn" und "gUZ" bedeutet "gegen den Uhrzeigersinn".
Darüber hinaus kann auch ein Drehmoment um die Achsen X und Y ermittelt werden.

Die Kapazitäten der Plattenkondensatoren 3,4,5,6 werden mit einem hier nicht dargestellten Kapazitäts-Digitalwandler erfasst. Als Kapazitäts-Digitalwandler wird zweckmäßigerweise ein Chip verwendet.

Der Raum zwischen dem Detektionselement 2 und dem Trägerelement 7 kann vollständig mit einem Kunststoff, insbesondere Silikon, gefüllt sein. Der Kunststoff dient als Federelement zwischen dem Detektionselement 2 und dem Trägerelement 7 derart, dass das Detektionselement 2, wenn es durch Belastung im Verhältnis zu dem Trägerelement 7 bewegt worden ist, in die Ausgangsposition zurückbewegt wird, wenn das Detektionselement 2 wieder frei von der Belastung ist. Darüber hinaus ist der Kunststoff zwischen den Platten angeordnet und vergrößert aufgrund der im Vergleich zu Luft größeren Permittivität die Kapazitäten der Plattenkondensatoren 3,4,5,6.

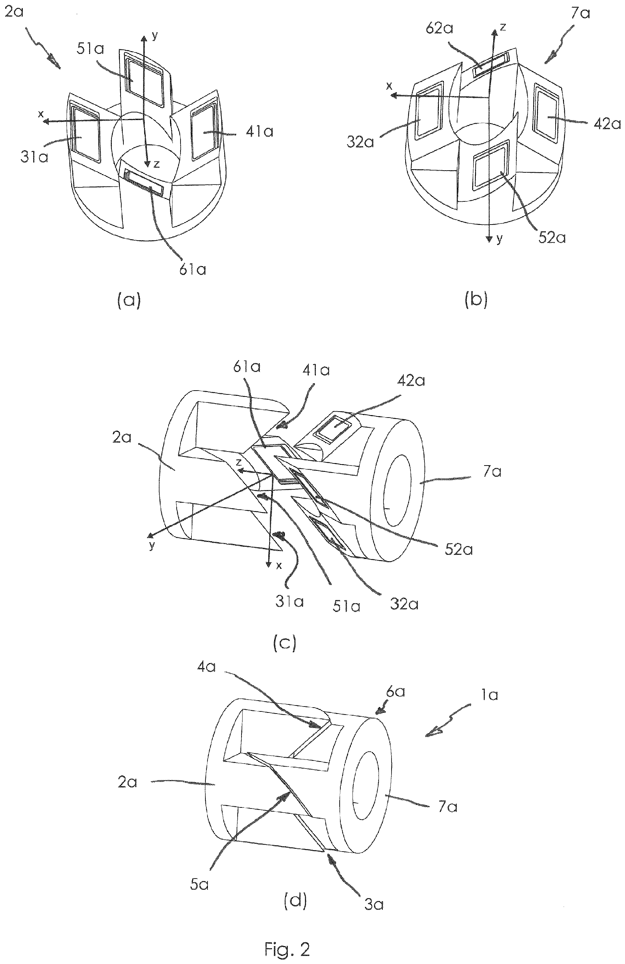

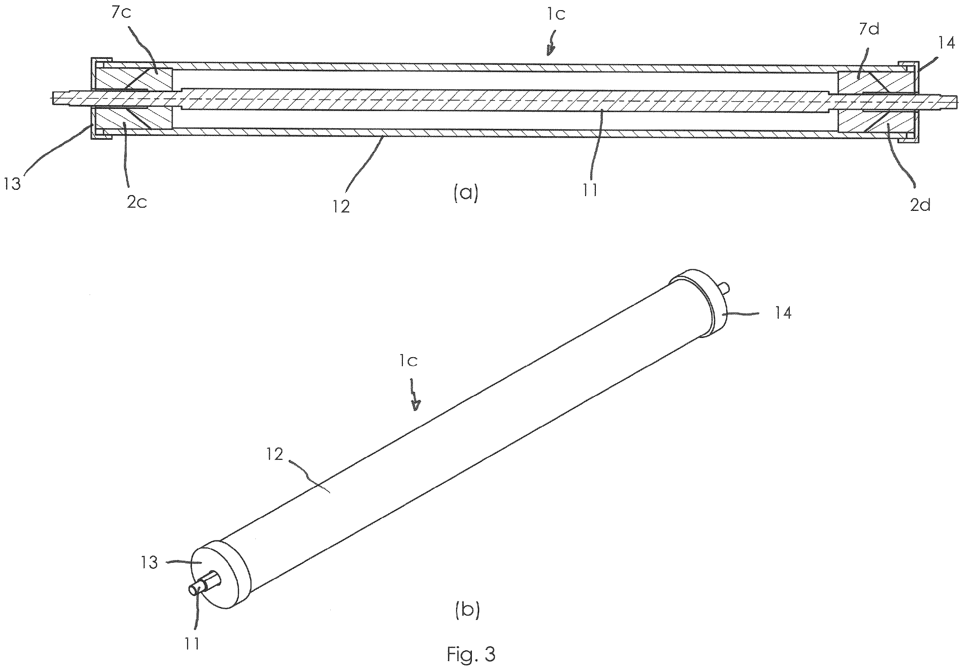

Es wird nun auf die Figuren 2 und 3 Bezug genommen, wo gleiche oder gleichwirkende Teile mit derselben Bezugszahl wie in Fig. 1 bezeichnet sind und der betreffenden Bezugszahl jeweils ein Buchstabe beigefügt ist.

In Fig. 2 ist ein weiterer erfindungsgemäßer Sensor 1a gezeigt, der durch ein Detektionselement 2a, das in Fig. 2a gezeigt ist, und ein Trägerelement 7a, das in Fig. 2b gezeigt ist, gebildet ist.
Wie auch bei dem Sensor 1 nach Fig. 1 sind die Platten 31a,32a;51a,52a von Plattenkondensatoren 3a,5a in derselben Ebene angeordnet. Der Sensor 1a unterscheidet sich von dem Sensor 1 nach Fig. 1 insbesondere dadurch, dass die Plattenkondensatoren 4a,6a, insbesondere deren Platten 41a,42a;61a,62a, in Ebenen angeordnet sind, die schräg zueinander und schräg zu der Ebene sind, in der die Plattenkondensatoren 3a,5a angeordnet sind. Vorteilhaft lässt sich bei dieser Anordnung, anders als bei dem Sensor nach Fig. 1, eine Kraft, die auf das Detektionselement 2a wirkt, in allen Raumrichtungen, insbesondere auch in Richtung der Achse Y bestimmen. Darüber hinaus können Drehmomente um alle drei gezeigten Achsen X,Y,Z detektiert werden.

In den angefügten Tabellen 3 und 4 sind verschiedene Fälle für Belastungen und dementsprechende Bewegungen des Detektionselements 2a im Verhältnis zu dem Trägerelement 7a dargestellt. Die Änderungen der Kapazitäten sind in derselben Weise gezeigt wie oben für die Tabellen 1 und 2 erläutert.
Die Angaben "<" und ">" bedeuten im Zusammenhang mit den Winkelangaben beispielsweise
- bei dem Eintrag "3a zu 4a" bei "Kraft in XY-Ebene, 45°" die Angabe "<", dass die berechnete Differenz aus den Kapazitäten 3a und 4a nur geringfügig kleiner wird, da die Kapazität 4a aufgrund des Abgleitens der entsprechenden Platten zueinander gleich groß bleibt und
- bei dem Eintrag "4a zu 5a" bei "Kraft in XY-Ebene, 45°" die Angabe ">", dass die berechnete Differenz aus den Kapazitäten 4a und 5a nur geringfügig größer wird, weil die Kapazität 4a aufgrund des Abgleitens der entsprechenden Platten zueinander gleich groß bleibt.

Fig. 3 zeigt einen Sensorgriff 1c, der zwei der Sensoren 1 oder 1a, die oben anhand der Figuren 1 und 2 erläutert worden sind, aufweist. Wie insbesondere der Schnittzeichnung Fig. 3a zu entnehmen ist, weist der Sensorgriff 1c ein Rohr 12 auf. In den jeweiligen Endbereichen des Rohrs 12 sind unter Bildung jeweilig eines der Sensoren 1 oder 1a je ein Detektionselement 2c,2d und ein Trägerelement 7c,7d in dem Rohr 12 angeordnet. Die Trägerelemente 7c,7d sind auf einer Welle 11 befestigt, im Verhältnis zu welcher eine Belastung, die auf das Rohr 12 aufgebracht wird, zu detektieren ist.

Die Detektionselemente 2c,2d sind fest mit dem Rohr 12 verbunden. Das Rohr 12 kann an seinen Enden und nach außen durch Deckel 13,14 geschlossen sein.

Wird auf das Rohr 12 eine Belastung ausgeübt, ändern sich wie anhand des Beispiels oben erläutert die Kapazitäten der Plattenkondensatoren, die an den Detektionselementen 2c,2d und den Trägerelementen 7c,7d angeordnet sind. Kapazitäten der Plattenkondensatoren, die mittels eines Kapazitäts-Digitalwandlers ermittelt werden, können über ein Kabel oder per Funk an ein Mikrocontroller übertragen werden, der in einem hier nicht gezeigten Gehäuse angeordnet ist, das an oder in dem Rohr 12 angeordnet ist. Optional kann der Mikrocontroller auch in einen der Sensoren integriert sein.

Es versteht sich, dass zur Ermittlung einer Kraft bzw. einer Kraftrichtung oder eines Drehmoments, die auf das Rohr ausgeübt wird, in analoger Weise wie oben für die Figuren 1 und 2 erläutert ist, die ermittelten Kapazitäten zueinander ins Verhältnis gesetzt werden.

**Tab. 1**

| Elektrode | Kraft in +X | Kraft in -X | Kraft in +Y | Kraft in -Y | Kraft in +Z | Kraft in -Z |
|---|---|---|---|---|---|---|
| 3 | < | > | = | = | < | > |
| 4 | > | < | = | = | < | > |
| 5 | < | > | = | = | < | > |
| 6 | > | < | = | = | < | > |
| | | | | | | |
| 3 zu 4 | << | >> | = | | = | = |
| 3 zu 5 | = | = | = | = | = | = |
| 3 zu 6 | << | >> | = | = | = | = |
| 4 zu 5 | >> | << | = | = | = | = |
| 4 zu 6 | = | = | = | = | = | = |
| 5 zu 6 | << | >> | = | = | = | = |

**Tab. 2**

| Elektrode | Kraft in XY-Ebene, 45° | Kraft in XY-Ebene, 225° | Kraft in XY-Ebene, 135° | Kraft in XY-Ebene, 315° | Moment um Z, US | Moment um Z, gUS |
|---|---|---|---|---|---|---|
| 3 | < | > | > | < | < | > |
| 4 | > | < | < | > | > | < |
| 5 | < | > | > | < | > | < |
| 6 | > | < | < | > | < | > |
| | | | | | | |
| 3 zu 4 | << | >> | >> | << | << | >> |
| 3 zu 5 | = | = | = | = | << | >> |
| 3 zu 6 | << | >> | >> | << | = | = |
| 4 zu 5 | >> | << | << | >> | = | = |
| 4 zu 6 | = | = | = | = | >> | << |
| 5 zu 6 | << | >> | >> | << | >> | << |

**Tab. 3**

| Elektrode | Kraft in + X | Kraft in -X | Kraft in +Y | Kraft in -Y | Kraft in +Z | Kraft in -Z |
|---|---|---|---|---|---|---|
| 3a | < | > | < | > | < | > |
| 4a | > | < | < | > | < | > |
| 5a | < | > | < | > | < | > |
| 6a | < | > | > | < | < | > |
| | | | | | | |
| 3a zu 4a | << | >> | = | = | = | = |
| 3a zu 5a | = | = | = | = | = | = |
| 3a zu 6a | = | = | << | >> | = | = |
| 4a zu 5a | >> | << | = | = | = | = |
| 4a zu 6a | >> | << | << | >> | = | = |
| 50 zu 6a | = | = | << | >> | = | = |

**Tab. 4**

| Elektrode | Kraft in XY-Ebene, 45° | Kraft in XY-Ebene, 225° | Kraft in XY-Ebene, 135° | Kraft in XY-Ebene, 315° | Moment um Z, US | Moment um Z, gUS |
|---|---|---|---|---|---|---|
| 3a | < | > | = | = | > | < |
| 4a | = | = | < | > | < | > |
| 5a | < | > | = | = | < | > |
| 6a | = | = | > | < | > | < |
| | | | | | | |
| 3a zu 4a | < | > | > | < | >> | << |
| 3a zu 5a | = | = | = | = | >> | << |
| 3a zu 6a | < | > | < | > | = | = |
| 4a zu 5a | > | < | < | > | = | = |
| 4a zu 6a | = | = | << | >> | << | >> |
| 5a zu 6a | < | > | < | > | << | >> |

## Patentansprüche

1. Sensor zur Detektion einer Kraft und/oder eines Drehmoments, der ein Element (2) zur Detektion der Kraft und/oder des Drehmoments aufweist, das in einem Zustand, der frei von einer Belastung durch die Kraft und/oder das Drehmoment ist, in einer Ausgangsposition angeordnet ist und unter Belastung durch die Kraft und/oder das Drehmoment in einer Belastungsposition angeordnet ist, wobei in dem Sensor (1) für das Detektionselement (2) eine Hauptdetektionsrichtung vorgesehen ist und der Sensor zur Detektion zumindest einen Plattenkondensator (3,4,5,6;3a,4a,5a,6a) aufweist,
**dadurch gekennzeichnet,**
**dass** der Sensor (1) zumindest zwei Plattenkondensatoren (3,4,5,6;3a,4a,5a,6a) aufweist und die Platten der Plattenkondensatoren (3,4,5,6;3a,4a,5a,6a) schräg zu der Hauptdetektionsrichtung (X) angeordnet sind.

2. Sensor nach Anspruch 1,
**dadurch gekennzeichnet,**
**dass** der Sensor (1; 1a) zumindest drei, vorzugsweise zumindest vier, Plattenkondensatoren (3,4,5,6;3a,4a,5a,6a) aufweist.

3. Sensor nach Anspruch 1 oder 2,
**dadurch gekennzeichnet,**
**dass** in dem Sensor (1;1a) für das Detektionselement zwei Nebendetektionsrichtungen (Y,Z) vorgesehen sind, die zueinander und zu der Haupdetektionsrichtung (X) orthogonal sind, und die Platten der Plattenkondensatoren (3,4,5,6;3a,4a,5a,6a) schräg zu der Haupdetektionsrichtung (X) und zumindest einer der Nebendetektionsrichtungen (Y,Z) angeordnet sind.

4. Sensor nach einem der Ansprüche 1 bis 3,
**dadurch gekennzeichnet,**
**dass** zumindest zwei, vorzugsweise zumindest vier, der Plattenkondensatoren (3,4,5,6;3a,4a,5a,6a) zueinander parallel angeordnet sind, wobei vorzugsweise jeweilig die Platten eines der Plattenkondensatoren (3,4,5,6;3a,4a,5a,6a) parallel zu den Platten eines oder mehrerer der anderen Plattenkondensatoren (3,4,5,6;3a,4a,5a,6a) angeordnet sind.

5. Sensor nach einem der Ansprüche 1 bis 4,
**dadurch gekennzeichnet,**
**dass** zumindest zwei der Plattenkondensatoren (3,4,5,6;3a,4a,5a,6a) nicht parallel zueinander angeordnet sind, wobei vorzugsweise jeweilig die Platten eines der Plattenkondensatoren (3,4,5,6;3a,4a,5a,6a) nicht parallel zu den Platten eines oder mehrerer der anderen Plattenkondensatoren (3,4,5,6;3a,4a,5a,6a) angeordnet sind.

6. Sensor nach Anspruch 5,
**dadurch gekennzeichnet,**
**dass** zumindest zwei Plattenkondensatoren (3,4,5,6;3a,4a,5a,6a) bezogen auf eine der Nebendetektionsachsen (Z), die entlang einer Längs- und/oder einer Symmetrieachse des Sensors (1;1a) verläuft, oder/und eine Ebene, die orthogonal zu der Hauptdetektionsachse (X) oder einer der Nebendetektionsachsen (Y,Z) ist, einander gegenüberliegend, insbesondere gespiegelt zueinander, angeordnet sind.

7. Sensor nach einem der Ansprüche 1 bis 6,
**dadurch gekennzeichnet,**
**dass** der Sensor (1;1a) mehr als zwei der Plattenkondensatoren aufweist und die Plattenkondensatoren (3,4,5,6;3a,4a,5a,6a) um eine Nebendetektionsachse (Z), die entlang einer Längs- und/oder einer Symmetrieachse des Sensors (1;1a) verläuft, herum angeordnet sind.

8. Sensor nach einem der Ansprüche 1 bis 7,
**dadurch gekennzeichnet,**
**dass** zumindest zwei Plattenkondensatoren (3,4,5,6;3a,4a,5a,6a) bezogen auf eine Ebene, die orthogonal zu einer Längs- und/oder einer Symmetrieachse des Sensors ist, einander gegenüberliegend, insbesondere gespiegelt zueinander, angeordnet sind.

9. Sensor nach einem der Ansprüche 1 bis 8,
**dadurch gekennzeichnet,**
**dass** das Detektionselement (2) unter der Belastung im Verhältnis zu einem Trägerelement (7), an dem es angeordnet ist, bewegbar ist und an dem Detektionselement (2) jeweilig eine Elektrodenseite der die jeweiligen Plattenkondensatoren (3,4,5,6;3a,4a,5a,6a) bildenden Platten (31,41,51,61) und an dem anderen Trägerelement (7) jeweilig die gegenüberliegende Elektrodenseite bildende Platten (32,42,52,62) angeordnet sind, wobei das Detektionselement (2) an dem Trägerelement (7) vorzugsweise derart gelagert ist, dass in der Hauptdetektionsrichtung (X) und den Nebendetektionsrichtungen (Y,Z) im Verhältnis zu dem Trägerelement (7) beweglich und besonders bevorzugt im Verhältnis zu dem Trägerelement (7) drehbar ist.

10. Sensor nach einem der Ansprüche 1 bis 9,
**dadurch gekennzeichnet,**
**dass** zumindest der Raum zwischen dem Detektionselement (2) und dem Trägerelement (7), insbesondere auch der das Dielektrikum bildende Raum zwischen den Platten, mit einem elastischen Material, vorzugsweise mit einem Kunststoff, besonders bevorzugt mit einem Elastomer, gefüllt ist, wobei das Detektionselement (2) vorzugsweise durch das elastische Material an dem Trägerelement (7) gelagert ist.

11. Sensor nach einem der Ansprüche 1 bis 10,
**gekennzeichnet durch** eine Einrichtung (8) zur Messung der Kapazitäten der Plattenkondensatoren (3,4,5,6;3a,4a,5a,6a) und eine Einrichtung (10) zur Übermittlung der Messergebnisse und vorzugsweise eine Einrichtung (9) zur Bestimmung der Kraft und/oder des Drehmoments aus den gemessenen Kapazitäten.

12. Sensor nach einem der Ansprüche 1 bis 11,
**dadurch gekennzeichnet,**
**dass** die Bestimmungseinrichtung (9) zum Vergleich der ermittelten Kapazitäten oder/und Kapazitätsänderungen, insbesondere durch Differenzbildung, vorgesehen ist, insbesondere um Messungenauigkeiten oder Messstörungen zu kompensieren.

13. Sensor nach einem der Ansprüche 1 bis 12,
**dadurch gekennzeichnet,**
**dass** das Detektionselement (2) einen länglichen, vorzugsweise zylindrischen, Körper umfasst, der bevorzugt zumindest abschnittsweise hohl, vorzugsweise hohlzylindrisch, ist, wobei das Detektionselement (2) vorzugsweise einen Handgriff bildet und/oder an einem Handgriff angeordnet ist.

14. Sensor nach einem der Ansprüche 1 bis 13,
**dadurch gekennzeichnet,**
**dass** der Sensor (1) Teil einer manuellen Steuerung eines durch einen Motor angetriebenen Geräts, vorzugsweise eines Fahrzeugs oder eines Roboterarms, ist.

15. Verfahren zur Detektion einer Kraft und/oder eines Drehmoments mittels eines Sensors (1), bei dem mit einem Element (2) zur Detektion der Kraft und/oder des Drehmoments detektiert wird, das in einem Zustand, der frei von einer Belastung durch die Kraft und/oder das Drehmoment ist, in einer Ausgangsposition angeordnet ist und unter Belastung durch die Kraft und/oder das Drehmoment in einer Belastungsposition angeordnet ist, wobei in dem Sensor (1) für das Detektionselement (2) eine Hauptdetektionsrichtung vorgesehen wird und der Sensor zur Detektion zumindest einen Plattenkondensator (3,4,5,6;3a,4a,5a,6a) aufweist,
**dadurch gekennzeichnet,**
**dass** der Sensor (1) mit zumindest zwei Plattenkondensatoren (3,4,5,6;3a,4a,5a,6a) versehen wird und die Platten der Plattenkondensatoren (3,4,5,6;3a,4a,5a,6a) schräg zu der Hauptdetektionsrichtung (X) angeordnet werden.
